# EUROPEAN PATENT SPECIFICATION

(11) **EP 2 453 692 B1**
(45) Date of publication and mention of the grant of the patent: **02.10.2013**
(21) Application number: 10290607.0
(22) Date of filing: 12.11.2010
(51) Int. Cl.: H04W 24/02, H04W 36/00

(54) **Automatic neighbor relation table setup**
Tabelleneinstellung mittels automatischer Nachbarschaftsbeziehung
Configuration automatique de tableaux de relations de voisinage

(43) Date of publication of application: 16.05.2012
(73) Proprietor: Alcatel Lucent, 75007 Paris (FR)
(72) Inventor: Ewe, Lutz, 70469 Stuttgart (DE); Bakker, Hajo, 71735 Eberdingen (DE)
(74) Representative: Wetzel, Emmanuelle

(56) References cited:
- US-A1- 2009 264 130
- ZTE ET AL: "ANRF for UTRAN", 3GPP DRAFT; R3-102739, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 1 October 2010 (2010-10-01), XP050453470, [retrieved on 2010-10-01]
- "LTE; Evolved Universal Terrestrial Radio Access (E-UTRA); Radio Resource Control (RRC); Protocol specification (3GPP TS 36.331 version 9.3.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V9.3.0, 1 July 2010 (2010-07-01), XP014047472,

## Description

### Field of the invention

The invention relates to the field of mobile telecommunication, more specifically to automatic neighbor relation table setup in mobile telecommunication.

### Background and related art

According to Third Generation Partnership Project (3GPP) specifications mobile devices in a cellular digital telecommunication network can be set into an Automatic Neighbor Relation (ANR) setup mode via a Radio Resource Control (RRC) message. In this mode the mobile devices in the respective cell measure signal power signals from neighboring base stations. If the signal of a neighboring base station has a signal power above a signal power threshold for at least a time period also called time-to-trigger (TTT), the physical cell identity (PCI) of this cell is reported to the serving base station of the respective mobile device.

The ANR mode serves for the serving base station to get to know PCIs of its neighbors. For example if a new cell is introduced into an existing network, the neighboring base stations set their mobile devices into the ANR setup mode. Some mobile devices will be located near the newly introduced cell and measure signals from the neighboring cell. The physical cell identity of the newly introduced cell is then reported to the serving base station of the respective mobile device. If the PCI is not yet known to the serving base station, the serving base station transmits a signal to the mobile device having reported the newly introduced cell. The signal is indicative for the mobile device to measure a cell global identity (CGI) of the newly discovered cell. The serving base station then establishes via X2 interface a connection to the base station of the newly introduced cell.

The report of the PCI from the mobile device to the base station is called according to 3GPP specifications an A4 event. The A4 event is triggered always when a mobile device measures a signal power from a neighboring base station for a certain time period above a signal threshold.

In "ANRF for UTRAN" (3GPP Draft; R3-102739; 2010-10-1) by ZTE et al. it is described that the RNC keeps a NRT for each cell that the RNC has. For each NR, the NRT contains the Target Cell Identifier (TCI), which identifies the target cell. For UTRAN, the TCI corresponds to the UTAN Cell PLMN-Id + LAI + RAC + Cell Identity(RNC ID) + PSC + UARFCN of the target cell.

### Summary

It is an object of the present invention to provide an improved method of adding a cell identity to a neighbor relation table, an improved base station apparatus, an improved mobile device, and improved computer-readable storage media for such an improved mobile device and such an improved base station apparatus.

This object is achieved by the method, the base station apparatus, the mobile device, and the computer-readable storage media according to the independent claims. Embodiments of the invention are given in the dependent claims.

The invention relates to a method of adding a cell identity to a neighbor relation table of a base station serving at least one mobile device in a cellular digital wireless telecommunication system. The neighbor relation table stores a set of cell identities of previously detected cells. The previously detected cells may have been detected by other mobile devices and/or the serving base station and/or other base stations. A mobile device may be understood herein for example as a mobile telephone, a mobile computer, a personal digital assistant, or a smartphone.

The set of cell identities is read from the neighbor relation table by the base station. The neighbor relation table of the base station may also be empty. In this case the set of cell identities comprises no cell identity. In other words, the set of cell identities may also be empty. The set of cell identities is then transmitted from the base station to the at least one mobile device. The mobile device stores the set of cell identities. The mobile device measures signal power of signals received from neighboring base stations and reports the set identity of one of the neighboring base stations to the serving base station, if the following two conditions are fulfilled. The signal power of the one of the signals is greater than a signal power threshold and the cell identity of the neighboring cell is not an element of the set of cell identities. In other words, the cell identity is only reported to the neighboring cell, if the serving base station has not indicated to the at least one mobile device that the cell identity is already known to the serving base station.

Upon receipt of the report from the at least one mobile device by the serving base station, the reported cell identity is added to the neighbor relation table of the serving base station.

In other words, the serving base station transmits information about neighboring cells already known to the serving base station to the at least one mobile device. The mobile device then transmits only an additional cell identity, if the cell identity has not been transmitted to the at least one mobile device by the serving base station before.

According to embodiments of the invention cell global identity of the neighboring cell is transmitted to the serving base station, if the two conditions are fulfilled. Then, a wired connection is established between the base station and the one of the neighboring base stations. This wired connection is preferably established via the X2 interface according to 3GPP standards.

Embodiments of the invention are advantageous, because it is avoided that cell identities already known to the serving base station are transmitted from the at least one mobile device to the serving base station. The at least one mobile device stores information about cell identities known to the serving base station. If the cell identity is already known to the serving base station, the at least one mobile device does not transmit the respective cell identity to the serving base station. Unnecessary data transmissions are avoided. In other words, according to 3GPP standards unnecessary A4 events are avoided, because the at least one mobile device stores information about physical cell identities already known to the serving base station.

According to embodiments of the invention further cell identities are reported from a neighbor relation table of the one of the neighboring base stations to the serving base station. The further cell identities are then added to the neighbor relation table of the serving base station. In other words, the neighbor relation table of the serving base station is updated with cell identities of neighbors of the one of the neighboring base stations. These base stations may also be referred to as neighbor's neighbors of the serving base station.

According to embodiments of the invention information is transmitted to that at least one mobile device from the serving base station. The information causes the at least one mobile device to measure signal power of signals received from the neighboring base stations and to report the cell identity of the one of the neighboring base station, if the two conditions are fulfilled. In other words, the serving base station transmits an RRC message to the at least one mobile device switching the at least one mobile device to the ANR setup mode. Alternatively, the at least one mobile device may for example be already switched to the ANR setup mode before.

According to embodiments of the invention the set of cell identities is transmitted to every mobile device in the cell of the serving base station, whenever at least one cell identity has been added to the set of cell identities. In other words, when the neighbor relation table of the serving base station is updated, the updated set of cell identities is transmitted to every mobile device in the cell. This is advantageous, because every mobile device always stores information about every cell identity known to the serving base station.

According to embodiments of the invention the set of cell identities is transmitted to every mobile device in the cell of the serving base station only once, when the respective mobile device establishes a connection to the base station after having been moved into the cell or after having been switched on. This is advantageous because unnecessary data transmissions are avoided. This is especially advantageous, when a new cell is added to an already existing network. In this case usually every neighboring base station of the serving base station is already known to the serving base station except for the base station of the newly added cell.

According to embodiments of the invention a further set of cell identities is transmitted to the at least one mobile device. The further set of cell identities is indicative of cell identities, to which a handover of the at least one mobile device is avoided. This set of cell identities may also be referred to as a blacklist for handover procedures according to 3GPP standards. The further set of cell identities is not identical to the set of cell identities. The further set of cell identities is a blacklist for handovers according to 3GPP standards. The set of cell identities may be referred to as a blacklist for A4 events according to 3GPP standards.

According to embodiments of the invention the mobile device detects the CGI of the neighbouring base station automatically after having reported the respective cell identity to the serving base station. The CGI is also transmitted automatically by the mobile device to the serving base station automatically. Transmission of the CGI may be performed after having transmitted the cell identity or together with the cell identity. Signaling effort is reduced by transmitting the cell identity together with the CGI.

It is not possible to use only one blacklist for both purposes. For the handover a blacklist would be used as an A4 event blacklist, no handovers would be possible to any neighboring cell of the serving base station already known to the serving base station.

In another aspect the invention relates to a base station apparatus with means for reading the set of cell identities from the neighbor relation table, means for transmitting the set of cell identities to the at least one mobile device and means for receiving a report about a cell identity from the at least one mobile device. The base station apparatus further comprises means for adding the reported cell identity to the neighbor relation table.

In another aspect the invention relates to a computer-readable storage medium comprising instructions that when executed by a base station apparatus according to embodiments of the invention cause the base station apparatus to perform a method according to embodiments of the invention. The method comprises reading the set of cell identities from the neighbor relation table, transmitting the set of cell identities to the at least one mobile device, and receiving a report about the cell identity from the at least one mobile device, and adding the reported cell identity to the neighbor relation table.

It is to be noted that the cell identity may for example be a physical cell identity according to 3GPP standards.

In yet another aspect the invention relates to a mobile device with means for receiving a set of cell identities from a serving base station. The mobile device further comprises means for measuring signal power of signals received from neighboring base stations and means for reporting a cell identity of one of the neighboring base stations, from which one of the signals has been received, to the serving base station. Two conditions have to be fulfilled before a cell identity is reported to the serving base station. First, the signal power of the one of the signals has to be greater than a signal power threshold. Second, the cell identity of the neighboring cell is not an element of the set of cell identities.

In yet another aspect the invention relates to a computer-readable storage medium comprising instructions that when executed by a mobile device according to embodiments of the invention cause the mobile device to receive a set of cell identities from a serving base station, measure signal power of signals received from neighboring base stations, and report a cell identity of one of the neighboring base stations. The cell identity has to be the cell identity of the base station, from which one of the signals has been received fulfilling two conditions. Firstly, the signal power of the one of the signals has to be greater than a signal power threshold and secondly, the cell identity of the neighboring cell is not an element of the set of cell identities.

### Brief description of the drawings

In the following embodiments of the invention are explained in greater detail, by way of example only, making reference to the drawings in which:
- Fig. 1: is a schematic view of a method according to embodiments of the invention; and
- Fig. 2: is a block diagram of a base station apparatus and a mobile device according to embodiments of the invention.

### Detailed description

Like numbered elements in these Figs. are either identical elements or perform the same function. Elements which have been discussed previously will not necessarily be discussed in later Figs. if the function is identical.

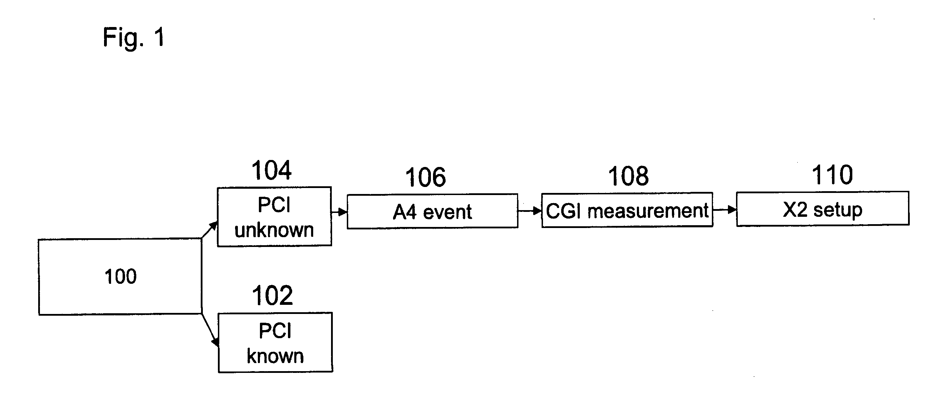

Fig. 1 is a schematic view of a method according to embodiments of the invention. At step 100 a mobile device detects a signal of a neighboring cell of the serving cell with a signal power above a signal power threshold for a time period being longer than a time period threshold. The physical cell identity of the neighboring cell is read by the mobile device and compared to a set of physical cell identities stored in a data storage of the mobile device. The set of cell identities has previously been transmitted from the serving base station to the mobile device and comprises physical cell identities of the neighbor relation table of the serving base station. In other words, the mobile device stores information about the physical cell identities of neighbor cells of the serving base station.

After measuring of signal power two cases have to be distinguished. The physical cell identity of the neighboring cell may be known to the serving base station. This corresponds to step 102 of Fig. 1. Step 104 of Fig. 1 represents the case that the physical cell identity of the neighboring cell is not known to the serving base station.

The physical cell identity of the neighboring cell is compared with the set of physical cell identities stored in the mobile device. If the set of physical cell identities is in the set of the physical cell identities, the mobile device takes no further action. In other words, unnecessary A4 events according to 3GPP standards are avoided, because the mobile device stores information about the physical cell identities known to the serving base station.

If the physical cell identity of the neighboring cell is not comprised by the set of physical cell identities stored in the mobile device, an A4 event 106 is transmitted to the serving base station.

After the A4 event 106 a CGI measurement 108 is performed by the mobile device. The CGI measurement may be performed automatically by the mobile device or the CGI measurement may be triggered from the serving base station. CGI measurement 108 may be performed automatically by the mobile device, because the mobile device estimates that a CGI measurement is necessary, because the physical cell identity of the neighboring cell is not part of the set of physical cell identities stored in the mobile device.

In step 110 a connection between the serving base station and the base station of the neighboring cell is established via X2 interface.

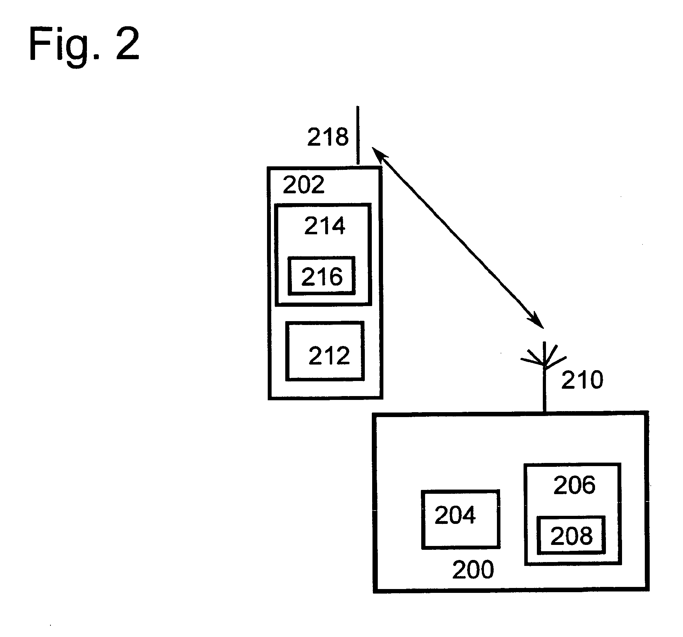

Fig. 2 is a block diagram of a base station 200 and a mobile device 202. The base station apparatus 200 comprises a processor 204, a data storage 206 comprising program instructions 208, and an antenna 210. The mobile device 202 comprises a processor 212, a data storage 214 comprising program instructions 216, and an antenna 218.

The processor 204 of base station 200 is adapted to execute program instructions 208. When executing program instructions 208 the processor 204 reads a set of cell identities from the neighbor relation table of the base station 200. The neighbor relation table may also be stored in data storage 206. Processor 204 further causes the base station apparatus to transmit the set of cell identities to the mobile device 202 via antenna 210. Mobile device 202 receives the set of cell identities via antenna 218 and stores the set of cell identities in data storage 214.

Processor 212 of mobile device 202 is adapted to execute program instructions 216 stored in data storage 214. Program instructions 216 cause the processor 212 to measure signal power of signals received from neighboring base stations. If the signal power of one of the measured signals is greater than a signal power and the cell identity of the neighboring cell with this signal is not an element of the set of cell identities stored in data storage 214, the cell identity is reported by mobile device 202 via antenna 218 to base station 200. Base station 200 receives the cell identity via antenna 210. The reported cell identity is then added to the neighbor relation table of base station 200.

Additionally, an updated set of cell identities may then be transmitted from base station 200 to mobile device 202.

### List of reference numerals

| | |
|---|---|
| 100 | Measure signal power |
| 102 | PCI known |
| 104 | PCI unknown |
| 106 | A4 event |
| 108 | CGI measurement |
| 110 | X2 setup |
| 200 | Base station |
| 202 | Mobile device |
| 204 | Processor |
| 206 | Data storage |
| 208 | Program instructions |
| 210 | Antenna |
| 212 | Processor |
| 214 | Data storage |
| 216 | Program instructions |
| 218 | Antenna |

## Claims

1. A method of adding a cell identity to a neighbour relation table of a base station (200) serving at least one mobile device (202) in a 3GPP cellular digital wireless telecommunication system, the neighbour relation table storing a set of cell identities of previously detected cells, wherein the method comprises the following steps:
- reading the set of cell identities from the neighbour relation table by the base station (200);
- transmitting the set of cell identities from the base station to the at least one mobile device (200);
- measuring signal power of signals received from neighbouring base stations by the at least one mobile device (202) and reporting the cell identity of one of the neighbouring base stations, from which one of the signals has been received, by the at least one mobile device (202) to the serving base station (200) of the mobile device, if both of the following conditions are fulfilled:
■ signal power of the one of the signals is greater than a signal power threshold;
■ the cell identity of the neighbouring cell is not an element of the set of cell identities;
- upon receipt of the report from the at least one mobile device (202) by the serving base station (200), adding the reported cell identity to the neighbour relation table.

2. Method according to claim 1, wherein the method further comprises the steps of:
- transmitting a cell global identity of the neighbouring cell to the serving base station (200), if the two conditions are fulfilled; and
- establishing a wired connection between the base station (200) and the one of the neighbouring base stations.

3. Method according to claim 2, wherein the method further comprises the step of:
- reporting further cell identities from a neighbour relation table of the one of the neighbouring base stations to the serving base station (200); and
- adding the further cell identities to the neighbour relation table of the serving base station (200).

4. Method according to any one of the preceding claims, wherein the method comprises further the step of:
- transmitting information to the at least one mobile device (202) from the serving base station (200), wherein the information causes the at least one mobile device to measure signal power of signals received from the neighbouring base stations and to report the cell identity of the one of the neighbouring base stations.

5. Method according to any one of the preceding claims, wherein the set of cell identities is transmitted to every mobile device in the cell of the serving base station (200), whenever at least one cell identity has been added to the set of cell identities.

6. Method according to any one of the claims 1-4, wherein the set of cell identities is transmitted to every mobile device in the cell of the serving base station (200) only once, when the respective mobile device establishes a connection to the base station after having been moved into the cell or after having been switched on.

7. Method according to any one of the preceding claims, wherein a further set of cell identities is transmitted to the at least one mobile device (202), the further set of cell identities being indicative of cell identities, to which a handover of the at least one mobile device is avoided.

8. Method according to any one of the preceding claims, wherein the cell global identity of the neighbouring cell is transmitted automatically to the serving base station (200) after reporting the cell identity of the neighbouring base station to the serving base station.

9. Method according to any one of the preceding claims, wherein the cell identity of the neighbouring base station and the cell global identity of the neighbouring cell are transmitted automatically within one report to the serving base station (200).

10. A base station apparatus for a 3GPP cellular digital wireless telecommunication system comprising
- means (204, 206, 208) for reading the set of cell identities from the neighbour relation table, the neighbour relation table being adapted for storing a set of cell identities of previously detected cells;
- means (204, 206, 208, 210) for transmitting the set of cell identities to the at least one mobile device;
- means (204, 206, 208, 210) for receiving a report about a cell identity from the at least one mobile device for reporting the cell identity of one of the neighbouring base stations, from which one of the signals has been received, by the at least one mobile device (202) to the serving base station (200) of the mobile device, if both of the following conditions are fulfilled:
■ signal power of the one of the signals is greater than a signal power threshold;
■ the cell identity of the neighbouring cell is not an element of the set of cell identities; and
- means (204, 206, 208) for adding the reported cell identity to the neighbour relation table.

11. A computer-readable storage medium comprising instructions that when executed by a base station apparatus (200) cause the base station apparatus to perform a method of adding a cell identity to a neighbour relation table of a base station serving at least one mobile device (202) in a 3GPP cellular digital wireless telecommunication system, the neighbour relation table storing a set of cell identities of previously detected cells, wherein the method comprises the following steps:
- reading the set of cell identities from the neighbour relation table;
- transmitting the set of cell identities to the at least one mobile device (202);
- receiving a report about a cell identity from the at least one mobile device (202) reporting the cell identity of one of the neighbouring base stations, from which one of the signals has been received, by the at least one mobile device (202) to the serving base station (200) of the mobile device, if both of the following conditions are fulfilled:
■ signal power of the one of the signals is greater than a signal power threshold;
■ the cell identity of the neighbouring cell is not an element of the set of cell identities;
- adding the reported cell identity to the neighbour relation table.

12. A mobile device for a 3GPP cellular digital wireless telecommunication system comprising
- means (212, 214, 216, 218) for receiving a set of cell identities from a serving base station (200), the set of cell identities received from the base station having been read from a neighbour relation table of the base station, the neighbour relation table storing a set of cell identities of previously detected cells;
- means (212, 214, 216, 218) for measuring signal power of signals received from neighbouring base stations; and
- means (212, 214, 216, 218) for reporting a cell identity of one of the neighbouring base stations, from which one of the signals has been received, to the serving base station, if both of the following conditions are fulfilled:
■ signal power of the one of the signals is greater than a signal power threshold;
■ the cell identity of the neighbouring cell is not an element of the set of cell identities.

13. A computer-readable storage medium comprising instructions that when executed by a mobile device (202) for a 3GPP cellular digital wireless telecommunication system cause the mobile device (202) to:
- receive a set of cell identities from a serving base station (200), the set of cell identities received from the base station having been read from a neighbour relation table of the base station (202), the neighbour relation table storing a set of cell identities of previously detected cells;
- measure signal power of signals received from neighbouring base stations; and
- report a cell identity of one of the neighbouring base stations, from which one of the signals has been received, to the serving base station, if both of the following conditions are fulfilled:
■ signal power of the one of the signals is greater than a signal power threshold;
■ the cell identity of the neighbouring cell is not an element of the set of cell identities.

## Patentansprüche

1. Verfahren zum Hinzufügen einer Zellidentität zu einer Nachbarbeziehungstabelle einer Basisstation (200), welche mindestens eine mobile Vorrichtung (202) In einem zellularen digitalen drahtlosen 3GPP-Telekommunikationssystem bedient, wobei die Nachbarbeziehungstabelle einen Satz von Zellidentitäten von zuvor erkannten Zellen speichert, wobei das Verfahren die folgenden Schritte umfasst:
- Lesen, durch die Basisstation (200), des Satzes von Zellidentitäten aus der Nachbarbeziehungstabelle;
- Übertragen des Satzes von Zellidentitäten von der Basisstation an die mindestens eine mobile Vorrichtung (200);
- Messen, durch die mindestens eine mobile Vorrichtung (202), der Signalleistung von von den benachbarten Basisstationen empfangenen Signalen, und Melden, durch die mindestens eine mobile Vorrichtung (202), der Zellidentität einer der benachbarten Basisstationen, von welcher eines der Signale empfangen wurde, an die bedienende Basisstation (200) der mobilen Vorrichtung, wenn beide der folgenden Bedingungen erfüllt sind:
• Die Signalleistung des einen der Signale ist größer als ein Signalleistungsgrenzwert;
• die Zellidentltät der benachbarten Zelle ist kein Element des Satzes von Zellidentitäten;
- nach Empfangen der Meldung von der mindestens einen mobilen Vorrichtung (202) an der bedienenden Basisstation (200), Hinzufügen der gemeldeten Zellidentität zu der Nachbarbeziehungstabelle.

2. Verfahren nach Anspruch 1, wobei das Verfahren weiterhin die folgenden Schritte umfasst:
- Übertragen einer globalen Zellidentität der benachbarten Zelle an die bedienende Basisstation (200), wenn die beiden Bedingungen erfüllt sind; und
- Aufbauen einer drahtlosen Verbindung zwischen der Basisstation (200) und der einen der benachbarten Basisstationen.

3. Verfahren nach Anspruch 2, wobei das Verfahren weiterhin die folgenden Schritte umfasst:
- Melden von weiteren Zellidentitäten aus einer Nachbarbeziehungstabelle der einen der benachbarten Basisstationen an die bedienende Basisstation (200); und
- Hinzufügen der weiteren Zellidentitäten zu der Nachbarbeziehungstabelle der bedienenden Basisstation ,200).

4. Verfahren nach einem beliebigen der vorstehenden Ansprüche, wobei das Verfahren weiterhin den folgenden Schritt umfasst:
- Übertragen von Informationen an die mindestens eine mobile Vorrichtung (202) von der bedienenden Basisstation (200), wobei die Informationen die mindestens eine mobile Vorrichtung dazu veranlassen, die Signalleistung der von den benachbarten Basisstation empfangenen Signale zu messen und die Zellidentität der einen der benachbarten Basisstationen zu melden.

5. Verfahren nach einem beliebigen der vorstehenden Ansprüche, wobei der Satz von Zellidentitäten an jede mobile Vorrichtung in der Zelle der bedienenden Basisstation (200) übertragen wird, wenn mindestens eine Zellidentität zu dem Satz von Zellidentitäten hinzugefügt wurde.

6. Verfahren nach einem beliebigen der Ansprüche 1-4, wobei der Satz von Zellidentitäten nur einmal an jede mobile Vorrichtung in der Zelle der bedienenden Basisstation (200) übertragen wird, wenn die entsprechende mobile Vorrichtung eine Verbindung mit der Basisstation aufbaut, nachdem sie sich In die Zelle begeben hat oder eingeschaltet wurde.

7. Verfahren nach einem beliebigen der vorstehenden Ansprüche, wobei ein weiterer Satz von Zellidentitäten an die mindestens eine mobile Vorrichtung (202) übertragen wird, wobei der weitere Satz von Zellidentitäten für Zellidentitäten, an welche ein Handover der mindestens einen mobilen Vorrichtung verhindert wird, indikativ ist.

8. Verfahren nach einem beliebigen der vorstehenden Ansprüche, wobei die globale Zellidentität der benachbarten Zelle nach Melden der Zellidentität der benachbarten Basisstation an die bedienende Basisstation automatisch an die bedienende Basisstation (200) übertragen wird.

9. Verfahren nach einem beliebigen der vorstehenden Ansprüche, wobei die Zellidentität der benachbarten Basisstation und die globale Zellidentität der benachbarten Zelle automatisch in einer Meldung an die bedienende Basisstation (200) übertragen werden.

10. Basisstationsvorrichtung für ein zellulares digitales drahtloses 3GPP-Telekommunikationssystem, umfassend:
- Mittel (204, 206, 208) zum Lesen des Satzes von Zellidentitäten aus der Nachbarbeziehungstabelle, wobei die Nachbarbeziehungstabelle für das Speichern eines Satzes von Zellidentitäten von zuvor erkannten Zellen ausgelegt ist;
- Mittel (204, 206, 208, 210) zum Übertragen des Satzes von Zellidentitäten an die mindestens eine mobile Vorrichtung;
- Mittel (204, 206, 208, 210) zum Empfangen einer Meldung über eine Zellidentität von der mindestens einen mobilen Vorrichtung zum Melden der Zellidentität einer der benachbarten Basisstationen, von welcher eines der Signale empfangen wurde, durch die mindestens eine mobile Vorrichtung (202) an die bedienende Basisstation (200) der mobilen Vorrichtung, wenn beide der folgenden Bedingungen erfüllt sind:
• Die Signalleistung des einen der Signale ist größer als ein Signalleistungsgrenzwert;
• die zellidentität der benachbarten Zelle ist kein Element des Satzes von Zellidentitäten;
und
- Mittel (204, 206, 208) zum Hinzufügen der gemeldeten Zellidentität zu der Nachbarbeziehungstalbelle.

11. Computerlesbares Speichermedium mit Befehlen, welche bei der Ausführung auf einer Basisstationsvorrichtung (200) bewirken, dass die Basisstationsvorrichtung ein Verfahren zum Hinzufügen einer Zellidentität zu einer Nachbarbeziehungstabelle einer Basisstation, welche mindestens eine mobile Vorrichtung (202) in einem zellularen digitalen drahtlosen 3GPP-Telekommunikationssystem bedient, durchführt, wobei die Nachbarbeziehungstabelle einen Satz von Zellidentitäten von zuvor erkannten Zellen speichert, wobei das Verfahren die folgenden Schritte umfasst:
- Lesen des Satzes von Zellidentitäten aus der Nachbarbeziehungstabelle;
- Übertragen des Satzes von Zellidentitäten an die mindestens eine mobile Vorrichtung (202);
- Empfangen einer Meldung über eine Zellidentität von der mindestens einen mobilen Vorrichtung (202) zum Melden der Zellidentität einer der benachbarten Basisstationen, von welcher eines der Signale empfangen wurde, durch die mindestens eine mobile Vorrichtung (202) an die bedienende Basisstation (200) der mobilen Vorrichtung, wenn beide der folgenden Bedingungen erfüllt sind;
• Die Signalleistung des einen der Signale ist größer als ein Signalleistungsgrenzwert;
• die Zellidentität der benachbarten Zelle ist kein Element des Satzes von Zellidentitäten;
- Hinzufügen der gemeldeten Zellidentität zu der Nachbarbeziehungstalbelle.

12. Mobile Vorrichtung für ein zellulares digitales drahtloses 3GPP-Telekommunikationssystem, umfassend:
- Mittel (212, 2214, 216, 218) zum Empfangen eines Satzes von Zellidentitäten von einer bedienenden Basisstation (200), wobei der von der Basisstation empfangene Satz von Zellidentitäten aus einer Nachbarbeziehungstabelle der Basisstation gelesen wurde, wobei de Nachbarbeziehungstabelle einen Satz von Zellidentitäten von zuvor erkannten Zellen speichert;
- Mittel (212, 2214, 216, 218) zum Messen der Signalleistung von von benachbarten Basisstationen empfangenen Signalen; und
- Mittel (212, 2214, 216, 218) zum Melden der Zellidentität einer der benachbarten Basisstationen, von welche eines der Signale empfangen wurde, an die bedienende Basisstation, wenn beide der folgenden Bedingungen erfüllt sind:
• Die Signalleistung des einen der Signale ist größer als ein Signalleistungsgrenzwert;
• die Zellidentität der benachbarten Zelle ist kein Element des Satzes von Zellidentitäten.

13. Computerlesbares Speichermedium mit Befehlen, weiche bei der Ausführung auf einer mobilen Vorrichtung (202) für ein zellulares digitales drahtloses 3GPP-Telekommunikationssystem bewirken, dass die mobile Vorrichtung (202) die folgenden Schritte durchführt:
- Empfangen eines Satzes von Zellidentitäten von einer bedienenden Basisstation (200), wobei der von der Basisstation empfangene Satz von Zellidentitäten aus einer Nachbarbeziehungstabelle der Basisstation (202) gelesen wurde, wobei die Nachbarbeziehungstabelle einen Satz von Zellidentitäten von zuvor erkannten Zellen speichert;
- Messen der Signalleistung von von benachbarten Basisstationen empfangenen Signalen;
und
- Melden einer Zellidentität einer der benachbarten Basisstationen, von welcher eines der Signale empfangen wurde, an die bedienende Basisstation, wenn beide der folgenden Bedingungen erfüllt sind:
• Die Signalleistung des einen der Signale ist größer als ein Signalleistungsgrenzwert;
• die Zellidentität der benachbarten Zelle ist kein Element des Satzes von Zellidentitäten.

## Revendications

1. Procédé d'ajout d'une identité de cellule à une table de relations de voisinage d'une station de base (200) desservant au moins un dispositif mobile (202) dans un système de télécommunication sans fil cellulaire numérique 3GPP, la table de relations de voisinage stockant un ensemble d'identités de cellules de cellules précédemment détectées, le procédé comprenant les étapes suivantes :
- lire l'ensemble d'identités de cellules de la table de relations de voisinage au moyen de la station de base (200) ;
- transmettre l'ensemble d'identités de cellules de la station de base à l'au moins un dispositif mobile (200) ;
- mesurer la puissance de signal de signaux provenant de stations de base voisines par l'au moins un dispositif mobile (202) et rapporter l'identité de cellule de l'une des stations de base voisines à partir de laquelle un des signaux a été reçu par l'au moins un dispositif mobile (202) à la station de base de desserte (200) du dispositif mobile, si les deux conditions suivantes sont remplies :
• la puissance de signal de l'un des signaux est supérieure à un seuil de puissance de signal ;
• l'identité de cellule de la cellule voisine n'est pas un élément de l'ensemble d'identités de cellules ;
- à la réception du rapport de l'au moins un dispositif mobile (202) par la station de base de desserte (200), ajouter l'identité de cellule rapportée à la table de relations de voisinage.

2. Procédé selon la revendication 1, le procédé comprenant en outre les étapes suivantes :
- transmettre une identité globale de cellule de la cellule voisine à la station de base de desserte (200), si les deux conditions sont remplies ; et
- établir une connexion par câble entre la station de base (200) et la station parmi les stations de base voisines.

3. Procédé selon la revendication 2, le procédé comprenant en outre les étapes suivantes :
- rapporter d'autres identités de cellules à partir de la table de relations de voisinage de la station parmi les stations de base voisines vers la station de base de desserte (200) ; et
- ajouter les autres identités de cellules à la table de relations de voisinage de la station de base de desserte (200).

4. Procédé selon l'une quelconque des revendications précédentes, le procédé comprenant en outre l'étape suivante :
- transmettre des informations à l'au moins un dispositif mobile (202) à partir de la station de base de desserte (200), dans lequel les informations entraînent la mesure par l'au moins un dispositif mobile d'une puissance de signal de signaux provenant des stations de base voisines et entraînent le rapport par l'au moins un dispositif mobile de l'identité de cellule de la station parmi les stations de base voisines.

5. Procédé selon l'une quelconque des revendications précédentes, dans lequel l'ensemble d'identités de cellules est transmis à chaque dispositif mobile dans la cellule de la station de base de desserte (200), chaque fois qu'au moins une identités de cellule a été ajoutée à l'ensemble d'identités de cellules.

6. Procédé selon l'une quelconque des revendications 1 à 4, dans lequel l'ensemble d'identités de cellules est transmis une seule fois à chaque dispositif mobile dans la cellule de la station de base de desserte (200), lorsque le dispositif mobile respectif établit une connexion avec la station de base après avoir été déplacé dans la cellule ou après avoir été activé.

7. Procédé selon l'une quelconque des revendications précédentes, dans lequel un autre ensemble d'identités de cellules est transmis à l'au moins un dispositif mobile (202), l'autre ensemble d'identités de cellules indiquant des identités de cellules, pour lesquelles un transfert de l'au moins un dispositif mobile est évité.

8. Procédé selon l'une quelconque des revendications précédentes, dans lequel l'identité globale de cellule de la cellule voisine est transmise automatiquement à la station de base de desserte (200) après avoir rapporté l'identité de cellule de la station de base voisine à la station de base de desserte.

9. Procédé selon l'une quelconque des revendications précédentes, dans lequel l'identité de cellule de la station de base voisine et l'identité globale de cellule de la cellule voisine sont transmises automatiquement dans un rapport à la station de base de desserte (200).

10. Appareil de station de base pour un système de télécommunication sans fil cellulaire numérique 3GPP comprenant
- moyens (204, 206, 208) pour lire l'ensemble d'identités de cellules de la table de relations de voisinage, la table de relations de voisinage étant adaptée pour stocker un ensemble d'identités de cellules de cellules précédemment détectées ;
- moyens (204, 206, 208, 210) pour transmettre l'ensemble d'identités de cellules à l'au moins un dispositif mobile ;
- moyens (204, 206, 208, 210) pour recevoir un rapport concernant une identité de cellule à partir de l'au moins un dispositif mobile pour rapporter l'identité de cellule d'une des stations de base voisines, à partir de laquelle un des signaux a été reçu, par l'au moins un dispositif mobile (202) à la station de base de desserte (200) du dispositif mobile, si les deux conditions suivantes sont remplies :
• la puissance de signal de l'un des signaux est supérieure à un seuil de puissance de signal ;
• l'identité de cellule de la cellule voisine n'est pas un élément de l'ensemble d'identités de cellules ; et
- moyens (204, 206, 208) pour ajouter l'identité de cellule rapportée à la table de relations de voisinage.

11. Support de stockage lisible par ordinateur comprenant des instructions qui, lorsqu'elles sont exécutées par un appareil de station de base (200), entraînent l'exécution par l'appareil de station de base d'un procédé d'ajout d'une identité de cellule à une table de relations de voisinage d'une station de base desservant au moins un dispositif mobile (202) dans un système de télécommunication sans fil cellulaire numérique 3GPP, la table de relations de voisinage stockant un ensemble d'identités de cellules de cellules précédemment détectées, le procédé comprenant les étapes suivantes :
- lire l'ensemble d'identités de cellules de la table de relations de voisinage ;
- transmettre l'ensemble d'identités de cellules à l'au moins un dispositif mobile (202) ;
- recevoir un rapport concernant une identité de cellule à partir de l'au moins un dispositif mobile (202) rapportant l'identité de cellule d'une des stations de base voisines, à partir de laquelle un des signaux a été reçu, par l'au moins un dispositif mobile (202) à la station de base de desserte (200) du dispositif mobile, si les deux conditions suivantes sont remplies :
• la puissance de signal de l'un des signaux est supérieure à un seuil de puissance de signal ;
• l'identité de cellule de la cellule voisine n'est pas un élément de l'ensemble d'identités de cellules ;
- ajouter l'identité de cellule rapportée à la table de relations de voisinage.

12. Dispositif mobile pour un système de télécommunication sans fil cellulaire numérique 3GPP comprenant
- des moyens (212, 214, 216, 218) pour recevoir un ensemble d'identités de cellules à partir d'une station de base de desserte (200), l'ensemble d'identités de cellules provenant de la station de base ayant été lu à partir d'une table de relations de voisinage de la station de base, la table de relations de voisinage stockant un ensemble d'identités de cellules de cellules précédemment détectées ;
- des moyens (212, 214, 216, 218) pour mesurer la puissance de signal de signaux provenant de stations de base voisines ; et
- des moyens (212, 214, 216, 218) pour rapporter une identité de cellule d'une des stations de base voisines, à partir de laquelle un des signaux a été reçu, à la station de base de desserte, si les deux conditions suivantes sont remplies :
• la puissance de signal de l'un des signaux est supérieure à un seuil de puissance de signal ;
• l'identité de cellule de la cellule voisine n'est pas un élément de l'ensemble d'identités de cellules.

13. Support de stockage lisible par ordinateur comprenant des instructions qui, lorsqu'elles sont exécutées par un dispositif mobile (202) pour un système de télécommunication sans fil cellulaire numérique 3GPP (202), conduisent le dispositif mobile (202) à :
- recevoir un ensemble d'identités de cellules à partir d'une station de base de desserte (200), l'ensemble d'identités de cellules provenant de la station de base ayant été lu à partir d'une table de relations de voisinage de la station de base (202), la table de relations de voisinage stockant un ensemble d'identités de cellules de cellules précédemment détectées ;
- mesurer la puissance de signal de signaux provenant de stations de base voisines ; et
- rapporter une identité de cellule d'une des stations de base voisines, à partir de laquelle un des signaux a été reçu, à la station de base de desserte, si les deux conditions suivantes sont remplies :
• la puissance de signal de l'un des signaux est supérieure à un seuil de puissance de signal ;
• l'identité de cellule de la cellule voisine n'est pas un élément de l'ensemble d'identités de cellules.
